# EUROPÄISCHE PATENTSCHRIFT

(11) **EP 1 632 098 B1**
(45) Veröffentlichungstag und Bekanntmachung des Hinweises auf die Patenterteilung: **18.04.2007**
(21) Anmeldenummer: 04741744.9
(22) Anmeldetag: 07.06.2004
(51) Int. Cl.: H04Q 7/22, H04M 3/53

(54) **VERFAHREN UND TELEKOMMUNIKATIONSGERÄT ZUM SENDEN UND EMPFANGEN VON SERVICENACHRICHTEN AN EIN BZW. VON EINEM SERVICEZENTRUM**
METHOD AND TELECOMMUNICATIONS DEVICE FOR TRANSMITTING AND RECEIVING SERVICE MESSAGES TO AND FROM A SERVICE CENTRE
PROCEDE ET APPAREIL DE TELECOMMUNICATION POUR L'ENVOI ET LA RECEPTION DE MESSAGES DE SERVICES RESPECTIVEMENT A PARTIR DE ET PAR UN CENTRE DE SERVICES

(30) Priorität: 10.06.2003 DE 10326173
(43) Veröffentlichungstag der Anmeldung: 08.03.2006
(73) Patentinhaber: SIEMENS AKTIENGESELLSCHAFT, 80333 München (DE)
(72) Erfinder: GOERTZ, Werner, 46282 Dorsten (DE); VAN DE LOGT, Marco, 47574 Goch (DE)
(86) Internationale Anmeldenummer: PCT/EP2004/051047
(87) Internationale Veröffentlichungsnummer: WO 2004/110083

(56) Entgegenhaltungen:
- DE-A- 10 041 792
- "Access and Terminals (AT); Short Message Service (SMS) for PSTN/ISDN; Short Message Communication between a fixed network Short Message Terminal Equipment and a Short Message Service Centre; ETSI ES 201 912" Januar 2002 (2002-01), ETSI STANDARDS, EUROPEAN TELECOMMUNICATIONS STANDARDS INSTITUTE, SOPHIA-ANTIPO, FR , XP014004425 ISSN: 0000-0001 in der Anmeldung erwähnt Kapitel 4 - 6 Annex A.1, A.2 und B.1

## Beschreibung

Die vorliegende Erfindung betrifft ein Verfahren zum Senden und Empfangen von Servicenachrichten an ein bzw. von einem Servicezentrum gemäß dem Oberbegriff des Patentanspruches 1 und ein Telekommunikationsgerät zum Senden und Empfangen von Servicenachrichten an ein bzw. von einem Servicezentrum gemäß dem Oberbegriff des Patentanspruches 10.

Das Übertragen (Senden und Empfangen; von Servicenachrichten an ein Telekommunikationsgerät - beispielsweise ein Mobiltelefon (Handy), ein Schnurlostelefon bestehend aus einer Basisstation sowie mindestens einem Mobilteil, ein Festnetztelefon, etc., - und umgekehrt ist ein Kommunikationsdienst, der bezüglich der mit den Nachrichten übertragenen Informationsinhalten zu unterschieden ist und der zunächst im Mobilfunkbereich Einzug gehalten hat und aufgrund der großen Akzeptanz sich mittlerweile auch nach und nach im Festnetzbereich etabliert. Von der Vielzahl der im Mobilfunknetz angebotenen Dienste - wie z.B. dem "**S**hort **M**essage (**M**essaging) **S**ervice (SMS)", dem "**E**nhanced **M**essage (**M**essaging) **S**ervice (EMS)", dem "**M**ultimedia **M**essage (**M**essaging) **S**ervice (MMS)", dem "Instant Messaging", der "**O**ver **T**he Air **A**ctivation (OTA)", dem "E-Mail" etc. - scheint im Festnetz wie im Mobilfunkbereich die Entwicklung derzeit dahin zu gehen, dass insbesondere der SMS- und MMS-Kommunikationsdienst eine größere Rolle spielen werden. Während der SMS-Dienst sowohl für den Mobilfunkbereich als auch für den Festnetzbereich bereits standardisiert ist (**für GSM**: ETSI TS 100 942 V7.0.0, Release 1998; f**ür ISDN/PSTN**: ETSI ES 201 912 V1.1.1, Release 01/2002) gilt für den MMS-Dienst Gleiches nur für den Mobilfunkbereich, wohingegen im Festnetzbereich derzeit Standardisierungsaktivitäten laufen.

Der SMS-Dienst im Fest- und Mobilnetz ist ein Punkt-zu-Punkt-Dienst und zeichnet sich durch eine reine Push-Funktionalität aus, d.h. der Inhalt der Kurznachricht [**S**hort **M**essage (SM)], deren Länge maximal 160 Byte beträgt, wird vom Kurznachrichten-Servicezentrum bzw. Kurznachrichten-Dienstzentrum [**S**hort **M**essage **S**ervice **C**enter (SMSC)] an das Telekommunikationsgerät gesendet, wobei der Verbindungsaufbau vom Servicezentrum initiiert wird. Während der SMS-Dienst im Mobilfunkbereich zwischen dem Telekommunikationsgerät und dem Kurznachrichten-Servicezentrum verbindungslos abläuft, indem die Kurznachricht ohne Aufbau einer Nutzkanalverbindung über einen Signalisierungskanal übertragen wird, erfolgt der Ablauf des SMS-Dienstes im Festnetz verbindungsorientiert, indem eine Nutzkanalverbindung zwischen dem Telekommunikationsgerät und dem Kurznachrichten-Servicezentrum hergestellt wird und die Kurznachricht hierüber mittels der Realisierung des Dienstmerkmals "**C**alling **L**ine **I**dentification (CLI)", was als "**C**alling **L**ine **I**dentification **P**resentation (CLIP)" bezeichnet wird, durch ein FSK- und/oder DTMF-Signalisierung (**F**requency **S**hift **K**eying bzw. **D**ual **T**one **M**ultiple **F**requency) übermittelt wird.

Beim MMS-Dienst, der im Mobilfunknetz wie der SMS-Diest verbindungslos über einen WAP-Transportweg (Nutzung des **W**ireless **A**pplication **P**rotocol) abgewickelt wird, kommt im Festnetz hingegen ein anderer Mechanismus zum Tragen:
Beim Versand einer Multimedianachricht [**M**ultimedia **M**essage (MM)], deren Größe im Prinzip unbegrenzt, aber derzeit auf ca. 100kByte beschränkt ist, an das Telekommunikationsgerät wird zunächst wieder verbindungsorientiert eine Mitteilungsnachricht, die sogenannte MMS-Notification, verschickt, die das Telekommunikationsgerät darüber informiert, dass eine Multimedianachricht beim Multimedianachrichten-Servicezentrum bzw. Multimedianachrichten-Dienstzentrum [**M**ultimedia **M**essage **S**ervice **C**enter (MMSC)] vorliegt. Dies geschieht über einen Push-Dienst wie z.B. den SMS-Dienst. Anschließend muss, im Gegensatz zum Empfang einer Kurznachricht, ein weiterer Ver bindungsaufbau vom Telekommunikationsgerät zum Multimedianachrichten-Servicezentrum initiiert werden, um den Inhalt der Multimedianachricht zu erhalten.

Sowohl der SMS-Dienst als auch der MMS-Dienst bieten sich dafür an, Informationsinhalte - wie z.B. Texte, multimediale Inhalte wie z.B. Audio-/Videodaten (Tonrufe, Bildschirmschoner), Grafiken, Programme etc., die entweder im jeweiligen Servicezentrum gespeichert sind oder die vom Servicezentrum durch Fremdbesorgung zur Verfügung gestellt werden können, herunterzuladen.

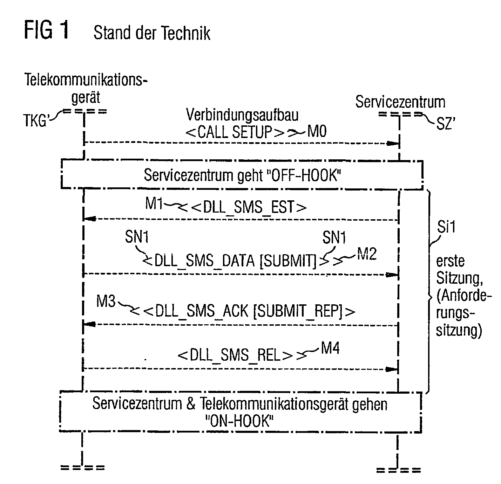

Im folgenden soll stellvertretend für den SMS- und MMS-Dienst im Mobilfunkbereich und für den MMS-Dienst im Festnetzbereich für den SMS-Dienst im Festnetzbereich anhand der FIGUREN 1 bis 3 aufgezeigt werden wie ein derartiges "Download-Szenario" basierend auf dem im Annex B zum Protokoll 2 des ETSI-Standards "ETSI ES 201 912 V1.1.1, Release 01/2002" definierten Nachrichten-Typen aktuell nach dem Stand der Technik funktioniert.

Es zeigen:
FIGUR 1 Nachrichtenablaufdiagramm für das Anfordern von Informationsinhalten durch ein Telekommunikationsgerät bei einem Servicezentrum, insbesondere einem Kurznachrichten-Servicezentrum,
FIGUR 2 Nachrichtenablaufdiagramm für das Ausliefern der gemäß FIGUR 1 angeforderten Informationsinhalte an das Telekommunikationsgerät durch das Servicezentrum, insbesondere das Kurznachrichten-Servicezentrum,
FIGUR 3 den prinzipiellen Aufbau des Telekommunikationsgerätes sowohl für das Anfordern der Informationsinhalte beim Servicezentrum, insbesondere beim Kurznachrichten-Servicezentrum, gemäß FIGUR 1 über ein Festnetz als auch für das Aus liefern der angeforderten Informationsinhalte an das Telekommunikationsgerät durch das Servicezentrum, insbesondere das Kurznachrichten-Servicezentrum gemäß FIGUR 2 über das Festnetz.

FIGUR 1 zeigt anhand eines Nachrichtenablaufdiagramms, wie ein Telekommunikationsgerät TKG' gemäß dem Stand der Technik Informationsinhalte - wie z.B. Texte, multimediale Inhalte wie z.B. Audio-/Videodaten (Tonrufe, Bildschirmschoner), Grafiken, Programme etc. - bei einem Servicezentrum SZ', insbesondere einem Kurznachrichten-Servicezentrum, anfordert. Das Telekommunikationsgerät TKG' baut dazu zunächst eine Verbindung zu dem Servicezentrum SZ' auf. Dazu überträgt es eine erste Meldung M0 mit dem Meldungsinhalt "CALL SETUP" an das Servicezentrum SZ'. Mit dem Empfang dieser ersten Meldung M0 geht das Servicezentrum SZ' in einen ersten Betriebszustand "OFF-HOOK".

In diesem Betriebszustand überträgt das Servicezentrum SZ' anschließend eine zweite Meldung M1 mit dem Meldungsinhalt "DLL_SMS_EST" (**D**ata **L**ink **L**ayer_**S**hort **M**essage **S**ervice_**EST**ablished) an das Telekommunikationsgerät TKG' und stößt damit eine erste Sitzung SI1 an. Mit der zweiten Meldung M1 teilt das Servicezentrum SZ' dem Telekommunikationsgerät TKG' mit, dass eine DLL-Verbindung (**D**ata **L**ink **L**ayer) besteht.

In der ersten Sitzung SI1 überträgt das Telekommunikationsgerät TKG' nach Erhalt der zweiten Meldung M1 mit einer dritten Meldung M2 und dem Meldungsinhalt "DLL_SMS_DATA[SUBMIT]" (Data **L**ink **L**ayer_**S**hort **M**essage **S**ervice**_DATA[SUBMIT]**) eine erste Servicenachricht SN1, insbesondere eine Kurznachricht, an das Servicezentrum SZ'. Mit dieser ersten Servicenachricht SN1 fordert das Telekommunikationsgerät TKG' von dem Servicezentrum SZ' ganz bestimmte, vom Benutzer des Telekommunikationsgerätes TKG gewünschte Informationsinhalte - wie z.B. Texte, multimediale Inhalte, beispielsweise Audio-/Videodaten (Tonrufe, Bildschirmschoner), Grafiken, Programme etc. - an.

Zur Bestätigung dessen, dass das Servicezentrum SZ' die erste Servicenachricht SN1 von dem Telekommunikationsgerät TKG' erhalten hat, schickt dieses eine vierte Meldung M3 mit dem Meldungsinhalt "DLL_SMS_ACK[SUBMIT_REP]" (**D**ata **L**ink **L**ayer_**S**hort **M**essage **S**ervice_**ACK**nowledge[**SUBMIT**_**REP**eated]) an das Telekommunikationsgerät TKG'. Als Bestätigung für den Erhalt der ersten Servicenachricht SN1 wird von dem Servicezentrum SZ' in dieser vierten Meldung M3 der Inhalt der ersten Servicenachricht SN1 als Wiederholung zurückgeschickt. Auf diese Weise kann das Telekommunikationsgerät TKG' überprüfen, ob die mit der dritten Meldung M2 gesendete erste Servicenachricht SN1 von dem Servicezentrum SZ' vollständig und richtig empfangen worden ist.

Ist das der Fall, so ist damit die mit der dritten Meldung M2 erfolgte Anforderung der Informationsinhalte abgeschlossen. Anderenfalls wird die mit der dritten Meldung M2 übertragene erste Servicenachricht SN1 nochmals übertragen. Scheitert auch dieser Übertragungsversuch, so hat das Telekommunikationsgerät TKG' zwei Optionen (in der FIGUR 1 nicht dargestellt):

Entweder es versucht eine erneute Übertragung bis die Übertragung erfolgreich gewesen ist oder es bricht den Übertragungsvorgang ab. Letzteres hat zur Folge, dass das Telekommunikationsgerät TKG' die Informationsinhalte in der aktuellen ersten Sitzung SI1 nicht anfordern kann und es bei Bedarf unmittelbar nach dem Abbruch oder mit einem zeitlichen Verzug eine komplett neue, die erste Sitzung SI1 (Anforderungssitzung) umfassende Prozedur starten muss.

Nachdem das Telekommunikationsgerät TKG' festgestellt hat, dass die gesendete erste Servicenachricht SN1 vollständig und richtig von dem Servicezentrum SZ' empfangen worden ist, schickt das Telekommunikationsgerät TKG' eine fünfte Meldung M4 mit dem Meldungsinhalt "DLL_SMS_REL" (**D**ata **L**ink **L**ayer_**S**hort **M**essage **S**ervice_**REL**ease) an das Servicezentrum SZ'. Mit dieser fünften Meldung M4 wird von dem Telekommunikationsgerät TKG' die erste Sitzung SI1 aufgelöst. Nach der Übertragung der fünften Meldung M4, die also die erste Sitzung SI1 abschließt, gehen sowohl das Servicezentrum SZ' als auch das Telekommunikationsgerät TKG' in einen zweiten Betriebszustand "ON-HOOK", Damit ist die bestehende Verbindung abgebaut und das Anfordern der Informationsinhalte durch das Telekommunikationsgerät TKG' gemäß dem Stand der Technik ist beendet.

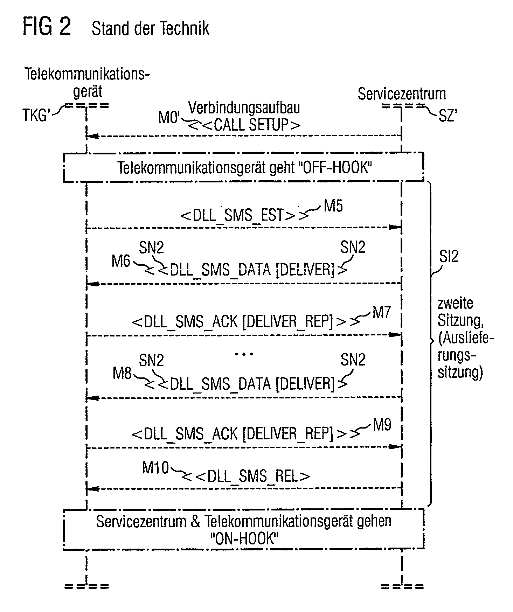

FIGUR 2 zeigt anhand eines Nachrichtenablaufdiagramms, wie das Servicezentrum SZ', insbesondere das Kurznachrichten-Servicezentrum, die von dem Telekommunikationsgerät TKG' gemäß der FIGUR 1 angeforderten Informationsinhalte an das Telekommunikationsgerät TKG' gemäß dem Stand der Technik ausliefert. Das Servicezentrum SZ' überträgt dazu zunächst eine weitere erste Meldung M0' wieder mit dem Meldungsinhalt "CALL SETUP" an das Telekommunikationsgerät TKG', mit der das Servicezentrum SZ' eine Verbindung zu dem Telekommunikationsgerät TKG' aufbaut. Aufgrund dieses Verbindungsaufbaus geht das Telekommunikationsgerät TKG' anschließend in den ersten Betriebszustand "OFF-HOOK".

In diesem Betriebszustand überträgt das Telekommunikationsgerät TKG' anschließend eine sechste Meldung M5 mit dem gleichen Meldungsinhalt "DLL_SMS_EST" (**D**ata **L**ink **L**ayer_**S**hort **M**essage **S**ervice_**EST**ablished) wie in der zweiten Meldung M1 in der FIGUR 1 an das Telekommunikationsgerät TKG' und stößt damit eine zweite Sitzung SI2 an. Mit der sechsten Meldung M5 teilt das Telekommunikationsgerät TKG' dem Servicezentrum SZ' mit, dass eine DLL-Verbindung (**D**ata **L**ink **L**ayer) besteht.

In der zweiten Sitzung SI2 überträgt das Servicezentrum SZ' nach Erhalt der sechsten Meldung M5 mit einer siebten Meldung M6 und dem Meldungsinhalt "DLL_SMS_DATA[DELIVER]" (**D**ata **L**ink **L**ayer_**S**hort **M**essage **S**ervice**_DATA[DELIVER]**) eine zweite Servicenachricht SN2, insbesondere wieder eine Kurznachricht, an das Telekommunikationsgerät TKG'. Mit dieser zweiten Servicenachricht SN2 liefert das Servicezentrum SZ' die von dem Telekommunikationsgerät TKG' angeforderten Informationsinhalte - wie z.B. Texte, multimediale Inhalte, beispielsweise Audio-/Videodaten (Tonrufe, Bildschirmschoner), Grafiken, Programme etc. - aus.

Sollte das Servicezentrum SZ' die von dem Telekommunikationsgerät TKG' angeforderten Informationsinhalte nicht haben (dieser Fall ist in der FIGUR 2 nicht dargestellt), so überträgt es an die Stelle der siebten Meldung M6 eine Hinweismeldung an das Telekommunikationsgerät TKG', mit der es das Gerät hierüber informiert und mit es diesem ankündigt, die bestehende zweite Sitzung SI2 aufzulösen und die Verbindung zu beenden.

Zur Bestätigung dessen, dass das Telekommunikationsgerät TKG' die zweite Servicenachricht SN2 von dem Servicezentrum SZ' erhalten hat, schickt dieses eine achte Meldung M7 mit dem Meldungsinhalt "DLL_SMS_ACK[DELIVER_REP]" (**D**ata **L**ink **L**ayer_**S**hort **M**essage **S**ervice_**ACK**nowledge[**DELIVER**_**REP**eated]) an das Servicezentrum SZ'. Als Bestätigung für den Erhalt der zweiten Servicenachricht SN2 wird von dem Telekommunikationsgerät TKG' in dieser achten Meldung M7 der Inhalt der zweiten Servicenachricht SN2 als Wiederholung zurückgeschickt. Auf diese Weise kann das Servicezentrum SZ' überprüfen, ob die mit der siebten Meldung M6 gesendete zweite Servicenachricht SN2 von dem Telekommunikationsgerät TKG' vollständig und richtig empfangen worden ist.

Ist das der Fall, so ist damit die mit der siebten Meldung M6 erfolgte Übertragung der Informationsinhalte abgeschlossen. Anderenfalls wird die mit der siebten Meldung M6 übertragene zweite Servicenachricht SN2 nochmals übertragen. Scheitert auch dieser Übertragungsversuch, so hat das Servicezentrum SZ' zwei Optionen (in der FIGUR 2 nicht dargestellt) :

Entweder es versucht eine erneute Übertragung bis die Übertragung erfolgreich gewesen ist oder es bricht den Übertragungsvorgang ab. Letzteres hat zur Folge, dass das Telekommunikationsgerät TKG' die angeforderten Informationsinhalte in der aktuellen zweiten Sitzung SI2 nicht erhalten hat und es bei Bedarf unmittelbar nach dem Abbruch oder mit einem zeitlichen Verzug eine komplett neue, die erste Sitzung SI1 (Anforderungssitzung) und die zweite Sitzung SI2 (Auslieferungssitzung) umfassende Prozedur starten muss.

Ist die Menge der auszuliefernden Informationsinhalte so groß, dass eine zweite Servicenachricht SN2 von der mit der Nachricht maximal übertragbaren Kapazität her nicht ausreicht, die auszuliefernden Informationsinhalte zu übertragen, so wiederholt sich die mit der siebten Meldung M6 und der achten Meldung M7 abgewickelte Teilauslieferung solange, bis das Servicezentrum SZ' in der zweiten Sitzung SI2 mit einer neunten Meldung M8 und dem Meldungsinhalt "DLL_SMS_DATA-[DELIVER]" (**D**ata **L**ink **L**ayer_**S**hort **M**essage **S**ervice_**DATA**[**DELIVER**]) letztmalig für die komplette Auslieferung der Informationsinhalte die zweite Servicenachricht SN2 übertragen hat und bis das Telekommunikationsgerät TKG' zur Bestätigung dessen, dass es die letzte zweite Servicenachricht SN2 von dem Servicezentrum SZ' erhalten hat, eine zehnte Meldung M9 mit dem Meldungsinhalt "DLI_SMS_ACK[DELIVER_REP]" (**D**ata **L**ink **L**ayer **S**hort **M**essage **S**ervice_**ACK**nowledge[**DELIVER**_**REP**eated]) an das Servicezentrum SZ' geschickt hat.

In dieser zehnten Meldung M9 wird wie in der achten Meldung M7 der Inhalt der letzten zweiten Servicenachricht SN2 als Wiederholung zurückgeschickt. Auf diese Weise kann das Servicezentrum SZ' nun abschließend überprüfen, ob die mit der neunten Meldung M8 letztmalig gesendete zweite Servicenachricht SN2 von dem Telekommunikationsgerät TKG' ebenfalls vollständig und richtig empfangen worden ist.

Ist das der Fall, so ist damit die mit der siebten Meldung M6 begonnene Übertragung der Informationsinhalte abgeschlossen. Anderenfalls wird die mit der neunten Meldung M8 letztmalig übertragene zweite Servicenachricht SN2 nochmals übertragen. Scheitert auch dieser Übertragungsversuch, so hat das Servicezentrum SZ' zwei Optionen (in der FIGUR 2 nicht dargestellt):

Entweder es versucht eine erneute Übertragung bis die Übertragung erfolgreich gewesen ist oder es bricht den, Übertragungsvorgang ab. Letzteres hat zur Folge, dass das Telekommunikationsgerät TKG' die angeforderten Informationsinhalte in der aktuellen zweiten Sitzung SI2 nicht vollständig (nur teilweise) erhalten hat und es bei Bedarf unmittelbar nach dem Abbruch oder mit einem zeitlichen Verzug eine komplett neue, die erste Sitzung SI1 (Anforderungssitzung) und die zweite Sitzung SI2 (Auslieferungssitzung) umfassende Prozedur starten muss.

Nachdem das Servicezentrum SZ' festgestellt hat, dass die gesendete zweite Servicenachricht SN2 vollständig und richtig von dem Telekommunikationsgerät TKG' empfangen worden ist, schickt das Servicezentrum SZ' eine elfte Meldung M10 mit dem gleichen Meldungsinhalt "DLL_SMS_REL" (**D**ata **L**ink **L**ayer_**S**hort **M**essage **S**ervice_**REL**ease) wie in der fünften Meldung M4 in der FIGUR 1 an das Telekommunikationsgerät TKG'. Mit dieser elften Meldung M10 wird von dem Servicezentrum SZ' die zweite Sitzung SI2 aufgelöst. Nach der Übertragung der elften Meldung M10, die also die zweite Sitzung SI2 abschließt, gehen sowohl das Servicezentrum SZ' als auch das Telekommunikationsgerät TKG' in den zweiten Betriebszustand "ON-HOOK". Damit ist aufgebaute Verbindung wieder abgebaut und das Ausliefern der von dem Telekommunikationsgerät TKG' angeforderten Informationsinhalte durch das Servicezentrum SZ' gemäß dem Stand der Technik ist beendet.

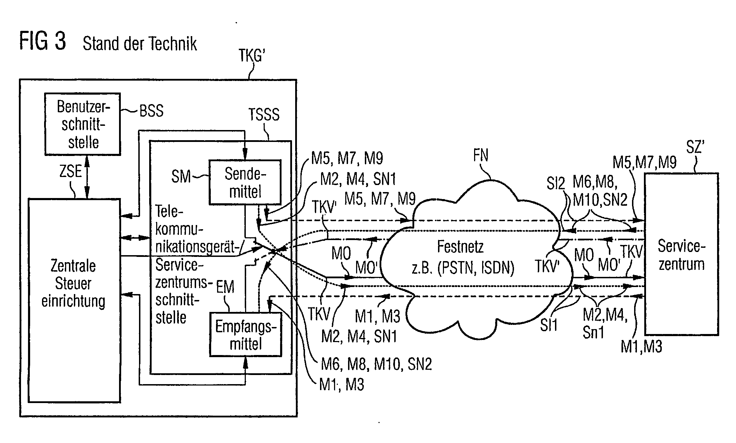

FIGUR 3 zeigt den prinzipiellen Aufbau des Telekommunikationsgerätes TKG' einerseits für das Anfordern der Informationsinhalte beim Servicezentrum SZ', insbesondere beim Kurznachrichten-Servicezentrum, gemäß der FIGUR 1 über ein beispielsweise als Public Switched Telephone Network (PSTN) oder als Integrated Services Digital Network (ISDN) ausgebildetes Festnetz FN und andererseits für das Ausliefern der angeforderten Informationsinhalte an das Telekommunikationsgerät TKG' durch das Servicezentrum SZ' gemäß der FIGUR 2 über das Festnetz FN.

Damit das Telekommunikationsgerät TKG' die in den FIGUREN 1 und 2 dargestellten Meldungen M0, M0', M1...M10 und die erste Servicenachricht SN1 übertragen (senden und empfangen) kann, weist das Telekommunikationsgerät TKG' eine Zentrale Steuereinrichtung ZSE zur Steuerung der Funktions- und Bedienabläufe in dem Telekommunikationsgerät TKG', eine Benutzerschnittstelle BSS sowie eine Telekommunikationsgerät-/Servicezentrumsschnittstelle TSSS auf. Die Benutzerschnittstelle BSS umfasst z.B. die für Telekommunikationsgeräte typische Bedienoberfläche, bestehend aus eine Tastatur, einem Display sowie elektroakustische Wandler zur Spracheingabe und Sprachausgabe. Die Telekommunikationsgerät-/Servicezentrumsschnittstelle TSSS und die Benutzerschnittstelle BSS sind jeweils mit der Zentralen Steuereinrichtung ZSE verbunden. Die Telekommunikationsgerät-/Servicezentrumsschnittstelle TSSS weist zudem Sendemittel SM und Empfangsmittel EM auf, die ebenfalls mit der Zentralen Steuereinrichtung ZSE verbunden sind und über die das Telekommunikationsgerät TKG' mit dem Servicezentrum SZ' via dem Festnetz FN verbunden ist.

Möchte der Benutzer des Telekommunikationsgerätes TKG' benutzerspezifische Informationsinhalte, wie z.B. Texte, multimediale Inhalte, das sind Audio-/Videodaten, Grafiken, Programme etc., von dem Servicezentrum SZ' abrufen und herunterladen, so gibt er entsprechende das Herunterladen initiierende Kommandos an der Benutzerschnittstelle BSS ein und generiert über die Bedienoberfläche der Benutzerschnittstelle BSS die erste Servicenachricht SN1, z.B. eine Kurznachricht. Diese Kommandos und die erste Servicenachricht SN1 werden von der Zentralen Steuereinrichtung ZSE interpretiert. Erkennt die Zentrale Steuereinrichtung ZSE aufgrund dieser Interpretation der Kommandos und der ersten Servicenachricht SN1, dass der Benutzer des Telekommunikationsgerätes TKG' eine Telekommunikationsverbindung TKV zu dem Servicezentrum SZ' aufbauen möchte, so werden die Telekommunikationsgerät-/Servicezentrumsschnittstelle TSSS und insbesondere die Sendemittel SM in dieser Schnittstelle von der Zentralen Steuereinrichtung ZSE derart angesteuert, dass zunächst die erste Meldung M0 über das Festnetz FN an das Servicezentrum SZ' übertragen wird, womit gemäß den Ausführungen zu der FIGUR 1 die von dem Benutzer des Telekommunikationsgerätes TKG' gewünschte Telekommunikationsverbindung TKV aufgebaut ist.

Über diese aufgebaute Telekommunikationsverbindung TKV werden anschließend die in der FIGUR 1 dargestellten und zu der ersten Sitzung SI1 korrespondierenden Meldungen M1...M4 einschließlich der generierten ersten Servicenachricht SN1 zwischen dem Telekommunikationsgerät TKG' und dem Servicezentrum SZ' in der dort dargestellten Reihenfolge und Übertragungsrichtung übertragen. Hierzu werden von der Zentralen Steuereinrichtung ZSE in dem Telekommunikationsgerät TKG', je nach dem welche Meldung gerade und ob die erste Servicenachricht SN1 zu übertragen (zu senden bzw. zu empfangen) ist, entweder die Sendemittel SM oder die Empfangsmittel EM in der Telekommunikationsgerät-/Servicezentrumsschnittstelle TSSS mit dem Servicezentrum SZ' durch Leitungsanschaltung verbunden.

Sind die zu der ersten Sitzung SI1 korrespondierenden Meldungen M1...M4 und die erste Servicenachricht SN1 vollständig und richtig übertragen worden, wobei die hierzu auf der Seite des Telekommunikationsgerätes TKG' gegebenenfalls erforderliche Überprüfung einschließlich des Generierens der Bestätigungsmeldung in der Zentralen Steuereinrichtung ZSE durchge führt wird, und sind damit gemäß den Ausführungen zu der FIGUR 1 sowohl die erste Sitzung SI1 aufgelöst als auch letztlich die Telekommunikationsverbindung TKV zwischen dem Telekommunikationsgerät TKG' und dem Servicezentrum SZ' abgebaut, so kann die Auslieferung der von dem Benutzer des Telekommunikationsgerätes TKG' angeforderten Informationsinhalte durch das Servicezentrum SZ' gemäß der FIGUR 2 beginnen.

Das Servicezentrum SZ' baut zu diesem Zweck zeitversetzt eine weitere Telekommunikationsverbindung TKV' zu dem Telekommunikationsgerät TKG' auf. Es sendet dazu, wie in der Figur 2 dargestellt, die weitere erste Meldung M0' an das Telekommunikationsgerät TKG'. Über diese aufgebaute Telekommunikationsverbindung TKV' werden anschließend die in der Figur 2 dargestellten und zu der zweiten Sitzung SI2 korrespondierenden Meldungen M5...M10 einschließlich der von dem Servicezentrum SZ' jeweils generierten zweiten Servicenachricht SN2 zwischen dem Telekommunikationsgerät TKG' und dem Servicezentrum SZ' in der dort dargestellten Reihenfolge und Übertragungsrichtung übertragen. Hierzu werden von der Zentralen Steuereinrichtung ZSE in dem Telekommunikationsgerät TKG', je nach dem welche Meldung gerade zu übertragen (zu senden bzw. zu empfangen) ist und ob die zweite Servicenachricht SN2 übertragen wird, wieder entweder die Sendemittel SM oder die Empfangsmittel EM in der Telekommunikationsgerät-/Servicezentrumsschnittstelle TSSS mit dem Servicezentrum SZ' durch Leitungsanschaltung verbunden.

Sind die zu der zweiten Sitzung SI2 korrespondierenden Meldungen M5...M10 und jeweils die zweite Servicenachricht SN2 vollständig und richtig übertragen worden, wobei die hierzu auf der Seite des Telekommunikationsgerätes TKG' gegebenenfalls erforderliche Überprüfung einschließlich des Generierens der Bestätigungsmeldung in der Zentralen Steuereinrichtung ZSE durchgeführt wird, und sind damit gemäß den Ausführungen zu der FIGUR 2 sowohl die zweite Sitzung SI2 aufgelöst als auch letztlich die Telekommunikationsverbindung TKV' zwi schen dem Telekommunikationsgerät TKG' und dem Servicezentrum SZ' abgebaut, so ist das Herunterladen (Anfordern und Ausliefern) der von dem Benutzer des Telekommunikationsgerätes TKG' gewünschten Informationsinhalte vom Servicezentrum SZ' beendet bzw. abgeschlossen.

Die der Erfindung zugrundeliegende Aufgabe besteht darin, ein Verfahren und Telekommunikationsgerät zum Senden und Empfangen von Servicenachrichten an ein bzw. von einem Servicezentrum anzugeben, bei dem das Herunterladen von im Servicezentrum unmittelbar oder mittelbar verfügbaren, herunterladbaren Informationsinhalten dahingehend verbessert wird, dass auf einfache Weise sichergestellt ist, dass diejenige Person, die das Herunterladen initiiert auch die Kosten für die heruntergeladenen Informationsinhalte trägt und dass das Servicezentrum für die Übermittlung der Informationsinhalte nicht notwendigerweise die Rufnummer derjenigen Person kennen oder ermitteln muss.

Diese Aufgabe wird ausgehend von dem im Oberbegriff des Anspruchs 1 definierten Verfahren durch die im Kennzeichen des Anspruchs 1 angegebenen Merkmale gelöst.

Diese Aufgabe wird außerdem ausgehend von dem im Oberbegriff des Anspruchs 10 definierten Telekommunikationsgerät durch die im Kennzeichen des Anspruchs 10 angegebenen Merkmale gelöst.

Die der Erfindung zugrundeliegende Idee besteht darin, dass ein Telekommunikationsgerät eine Telekommunikationsverbindung zu einem Servicezentrum aufbaut und das Telekommunikationsgerät auf dieser Verbindung, ohne dass wie beim Stand der Technik eine weitere Telekommunikationsverbindung aufgebaut werden muss, sowohl die Informationsinhalte in einer ersten Sitzung (Anforderungssitzung) mit einer ersten Servicenachricht von dem Servicezentrum anfordert als auch die Informationsinhalte in einer zweiten Sitzung (Auslieferungssitzung) mit mindestens einer zweiten Servicenachricht von dem Servicezentrum erhält.

Für den SMS-Dienst im Festnetz bedeutet dies, dass der in der ETSI-Publikation "ETSI ES 201 912 V1.1.1, Release 01/2002" spezifizierte Dienst "**S**hort **M**essage **S**ervice (SMS)" bezüglich des Übertragungsprotokolls derart erweitert wird, dass zusätzlich zu der "Push-Funktionalität" mit der Realisierung des Dienstmerkmals "**C**alling **L**ine **I**dentification (CLI)", dem sogenannten "**C**alling **L**ine **I**dentification **P**resentation (CLIP)" eine "Poll-Funktionalität" geschaffen wird, für die die CLIP-Funktion nicht mehr erforderlich ist. Da eine Vielzahl von Telekommunikationsgeräten diese CLIP-Funktionalität nicht besitzt, bietet die "Poll-Funktionalität" dem Benutzer dieser Geräte die Möglichkeit, dass er diverse Informationsinhalte (z.B. Bilder, Melodien, Wetternachrichten etc.) per Benutzereingabe beim Servicezentrum herunterladen kann. Gegebenenfalls ist auch eine automatisches Herunterladen der Inhalte durch das Gerät vorstellbar.

Die Erfindung definiert eine vollständige Lösung zur Abbildung des SMS-Dienst im Festnetz an jedem Festnetzanschluss, egal ob dieser Anschluss über eine CLIP-Funktionalität verfügt oder nicht.

Insgesamt ergeben sich durch die Erfindung, bei der das Anfordern von Informationsinhalten beim Servicezentrum durch das Telekommunikationsgerät und das Ausliefern der Informationsinhalte an das Telekommunikationsgerät durch das Servicezentrum über eine einzige Telekommunikationsverbindung erfolgt, folgende Vorteile gegenüber dem Stand der Technik:
**(i)** Keine CLIP-Funktion für das Herunterladen von Informationsinhalten mehr notwendig,
**(ii)** die Verbindung wird vom Telekommunikationsgerät ausgelöst, dadurch fallen keine Kosten beim Servicezentrum an, sondern diese werden allein dem Benutzter des Telekommunikationsgerätes verrechnet,
**(iii)** das Servicezentrum braucht keine Verbindung mehr aufzubauen, wodurch sich der Aufwand im Servicezentrum verringert und dadurch sich ein Kostenvorteil für den Betreiber des Servicezentrum ergibt,
**(iv)** das Servicezentrum kann ortsunabhängig in Bezug zum Telekommunikationsgerät betrieben werden, so kann sich das Servicezentrum im Ausland befinden, während das Telekommunikationsgerät im Inland betrieben wird,
**(v)** es ist eine einfache Bedienoberfläche auf dem Telekommunikationsgerät für das Herunterladen der Informationsinhalte möglich, weil die betreffende Benutzerschnittstelle unabhängig von der sonstigen SMS-Benutzerschnittstelle realisiert werden kann,
**(vi)** aus der Sicht des Servicezentrumsbetreiber können die Kosten für das Herunterladen (Anfordern und Ausliefern) über eine spezielle hierfür zur Verfügung gestellte Rufnummer verrechnet werden,
**(vii)** für das Herunterladen braucht eine gegebenenfalls vorhandene CLIR-Funktion (Calling **L**ine Identification Restriction) nicht deaktiviert werden.

Die Weiterbildung der Erfindung in den Ansprüchen 2 und 3 bzw. 11 und 12 ist von Vorteil, weil das Telekommunikationsgerät die Kontrolle über die Telekommunikationsverbindung mit Beginn der zweiten Sitzung an das Servicezentrum abgibt und auf diese Weise unnötig lange zweite Sitzungen zu Kosten des Benutzers des Telekommunikationsgerätes unterbunden werden.

Weitere vorteilhafte Weiterbildungen der Erfindung sind in den übrigen Unteransprüchen angegeben.

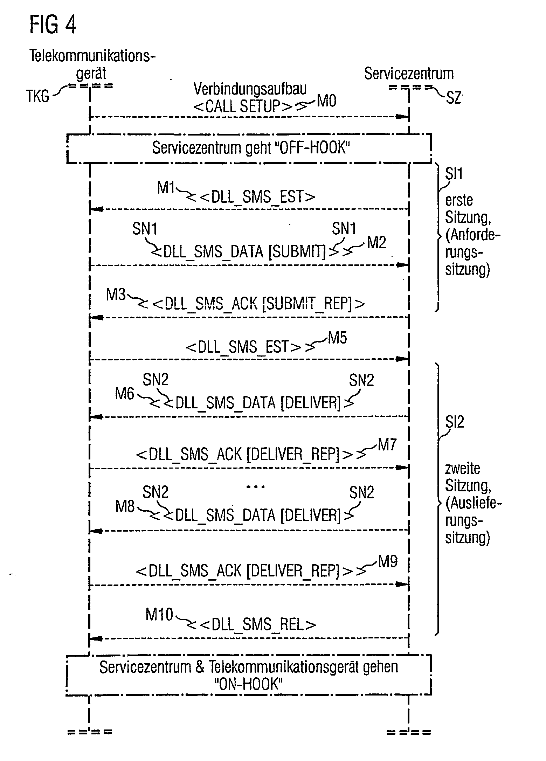

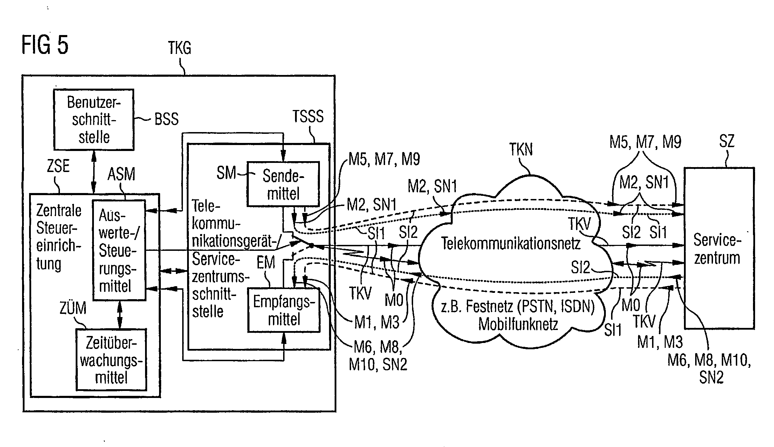

Ein Ausführungsbeispiel der Erfindung wird anhand der FIGUREN 4 und 5 erläutert. Es zeigen:

FIGUR 4 Nachrichtenablaufdiagramm für das Anfordern von Informationsinhalten durch ein Telekommunikationsgerät bei einem Servicezentrum, insbesondere einem Kurznachrichten-Servicezentrum und das Ausliefern der angeforderten Informationsinhalte an das Telekommunikationsgerät durch das Servicezentrum, insbesondere das Kurznachrichten-Servicezentrum, über ein Telekommunikationsnetz,

FIGUR 5 den prinzipiellen Aufbau des Telekommunikationsgerätes für das Anfordern von Informationsinhalten beim Servicezentrum, insbesondere beim Kurznachrichten-Servicezentrum, durch das Telekommunikationsgerät und das Ausliefern der angeforderten Informationsinhalte an das Telekommunikationsgerät durch das Servicezentrum, insbesondere das Kurznachrichten-Servicezentrum, gemäß FIGUR 4 über ein Telekommunikationsnetz.

FIGUR 4 zeigt anhand eines Nachrichtenablaufdiagramms, wie ein gegenüber dem Telekommunikationsgerät TKG' in den FIGUREN 1 bis 3 modifiziertes Telekommunikationsgerät TKG Informationsinhalte - wie z.B. Texte, multimediale Inhalte wie z.B. Audio-/Videodaten (Tonrufe, Bildschirmschoner), Grafiken, Programme etc. - bei einem gegenüber dem Servicezentrum SZ' in den FIGUREN 1 bis 3 modifiziertes Servicezentrum SZ, insbesondere einem Kurznachrichten-Servicezentrum, anfordert. Das Telekommunikationsgerät TKG baut dazu zunächst eine Verbindung zu dem Servicezentrum SZ auf. Dazu überträgt es wie in der FIGUR 1 die erste Meldung M0 mit dem Meldungsinhalt "CALL SETUP" an das Servicezentrum SZ. Mit dem Empfang dieser ersten Meldung M0 geht das Servicezentrum SZ in den ersten Betriebszustand "OFF-HOOK".

In diesem Betriebszustand überträgt das Servicezentrum SZ anschließend wie in der FIGUR 1 die zweite Meldung M1 mit dem Meldungsinhalt "DLL_SMS_EST" (**D**ata **L**ink **L**ayer_**S**hort **M**essage **S**ervice_**EST**ablished) an das Telekommunikationsgerät TKG und stößt damit wieder die erste Sitzung SI1 an. Mit der zweiten Meldung M1 teilt das Servicezentrum SZ dem Telekommunikationsgerät TKG mit, dass eine DLL-Verbindung (Data Link Layer) besteht.

In der ersten Sitzung SI1 überträgt das Telekommunikationsgerät TKG nach Erhalt der zweiten Meldung M1 wie in der FIGUR 1 mit der dritten Meldung M2 und dem Meldungsinhalt "DLL_SMS_DATA[SUBMIT]" (**D**ata **L**ink **L**ayer_**S**hort **M**essage **S**ervice_**DATA**[**SUBMIT**]) die erste Servicenachricht SN1, insbesondere eine Kurznachricht, an das Servicezentrum SZ. Mit dieser ersten Servicenachricht SN1 fordert das Telekommunikationsgerät TKG von dem Servicezentrum SZ ganz bestimmte, vom Benutzer des Telekommunikationsgerätes TKG gewünschte Informationsinhalte - wie z.B. Texte, multimediale Inhalte, beispielsweise Audio-/Videodaten (Tonrufe, Bildschirmschoner), Grafiken, Programme etc. - an.

Zur Bestätigung dessen, dass das Servicezentrum SZ die erste Servicenachricht SN1 von dem Telekommunikationsgerät TKG erhalten hat, schickt dieses wieder wie in der FIGUR 1 die vierte Meldung M3 mit dem Meldungsinhalt "DLL_SMS_ACK[SUB-MIT_REP]" (**D**ata **L**ink **L**ayer_**S**hort **M**essage **S**ervice_**ACK**nowledge[**SUBMIT**_**REP**eated]) an das Telekommunikationsgerät TKG. Als Bestätigung für den Erhalt der ersten Servicenachricht SN1 wird von dem Servicezentrum SZ in dieser vierten Meldung M3 wieder der Inhalt der ersten Servicenachricht SN1 als Wiederholung zurückgeschickt. Auf diese Weise kann das Telekommunikationsgerät TKG überprüfen, ob die mit der dritten Meldung M2 gesendete erste Servicenachricht SN1 von dem Servicezentrum SZ vollständig und richtig empfangen worden ist.

Ist das der Fall, so ist damit die mit der dritten Meldung M2 erfolgte Anforderung der Informationsinhalte abgeschlossen. Anderenfalls wird die mit der dritten Meldung M2 übertragene erste Servicenachricht SN1 nochmals übertragen. Scheitert auch dieser Übertragungsversuch, so hat das Telekommunikationsgerät TKG wie das Telekommunikationsgerät TKG' gemäß der FIGUR 1 zwei Optionen (ebenfalls in der FIGUR 4 nicht dargestellt) :

Entweder es versucht eine erneute Übertragung bis die Übertragung erfolgreich gewesen ist oder es bricht den Übertragungsvorgang ab. Letzteres hat zur Folge, dass das Telekommunikationsgerät TKG die Informationsinhalte in der aktuellen ersten Sitzung SI1 nicht anfordern kann und es bei Bedarf unmittelbar nach dem Abbruch oder mit einem zeitlichen Verzug eine komplett neue, die erste Sitzung SI1 (Anforderungssitzung) umfassende Prozedur starten muss.

Nachdem das Telekommunikationsgerät TKG festgestellt hat, dass die gesendete erste Servicenachricht SN1 vollständig und richtig von dem Servicezentrum SZ empfangen worden ist, schickt das Telekommunikationsgerät TKG nicht wie in der FIGUR 1 die fünfte Meldung M4 mit dem Meldungsinhalt "DLL_SMS_REL" (**D**ata **L**ink **L**ayer_**S**hort **M**essage **S**ervice_**REL**ease) an das Servicezentrum SZ, womit die von dem Telekommunikationsgerät TKG die erste Sitzung SI1 aufgelöst und letztlich die bestehende Verbindung abgebaut worden wäre, sondern wie in der Figur 2 die sechste Meldung M5 mit dem gleichen Meldungsinhalt "DLL_SMS_EST" (**D**ata **L**ink **L**ayer_**S**hort **M**essage **S**ervice_**EST**ablished) wie in der zweiten Meldung M1 an das Servicezentrum SZ. Mit der sechsten Meldung M5 teilt das Telekommunikationsgerät TKG dem Servicezentrum SZ nicht nur mit, dass die DLL-Verbindung (**D**ata **L**ink **L**ayer) nach wie vor besteht, sondern es findet auch ein direkter Wechsel von der ersten Sitzung SI1, der Anforderungssitzung, zu der zweiten Sitzung SI2, der Auslieferungssitzung SI2 statt, ohne dass es dabei wie in den FIGUREN 1 und 2 zu einem Abbau der bestehenden (alten) Verbindung und zu einem Neuaufbau einer weiteren Verbindung kommt.

### Mit anderen Worten:

Mit der Übertragung der sechsten Meldung M5 durch das Telekommunikationsgerät TKG, ohne dass zuvor von diesem die fünf te Meldung M4 übertragen wird, werden während der bestehenden Verbindung gleichzeitig die erste Sitzung SI1 beendet und die zweite Sitzung SI2 angestoßen, ohne dass die bestehende Verbindung abgebaut und eine neue Verbindung aufgebaut werden muss.

In der so angestoßenen zweiten Sitzung SI2 überträgt das Servicezentrum SZ nach Erhalt der sechsten Meldung M5 wie in der FIGUR 2 mit der siebten Meldung M6 und dem Meldungsinhalt "DLL_SMS_DATA[DELIVER]" (**D**ata **L**ink **L**ayer_**S**hort **M**essage **S**ervice_**DATA**[**DELIVER**]) wieder die zweite Servicenachricht SN2, insbesondere wieder eine Kurznachricht, an das Telekommunikationsgerät TKG. Mit dieser zweiten Servicenachricht SN2 liefert das Servicezentrum SZ die von dem Telekommunikationsgerät TKG angeforderten Informationsinhalte - wie z.B. Texte, multimediale Inhalte, beispielsweise Audio-/Videodaten (Tonrufe, Bildschirmschoner), Grafiken, Programme etc. - aus.

Sollte das Servicezentrum SZ die von dem Telekommunikationsgerät TKG angeforderten Informationsinhalte nicht haben (dieser Fall ist in der FIGUR 4 nicht dargestellt), so überträgt es an die Stelle der siebten Meldung M6 eine Hinweismeldung an das Telekommunikationsgerät TKG, mit der es das Gerät hierüber informiert und mit es diesem ankündigt, die bestehende zweite Sitzung SI2 aufzulösen und die Verbindung zu beenden.

Zur Bestätigung dessen, dass das Telekommunikationsgerät TKG die zweite Servicenachricht SN2 von dem Servicezentrum SZ erhalten hat, schickt dieses wie in der FIGUR 2 die achte Meldung M7 mit dem Meldungsinhalt "DLL_SMS_ACK[DELIVER_REP]" (**D**ata **L**ink **L**ayer_**S**hort **M**essage **S**ervice_**ACK**nowledge[**DELIVER_-**REPeated]) an das Servicezentrum SZ. Als Bestätigung für den Erhalt der zweiten Servicenachricht SN2 wird von dem Telekommunikationsgerät TKG in dieser achten Meldung M7 wieder der Inhalt der zweiten Servicenachricht SN2 als Wiederholung zurückgeschickt. Auf diese Weise kann das Servicezentrum SZ ü berprüfen, ob die mit der siebten Meldung M6 gesendete zweite Servicenachricht SN2 von dem Telekommunikationsgerät TKG vollständig und richtig empfangen worden ist.

Ist das der Fall, so ist damit die mit der siebten Meldung M6 erfolgte Übertragung der Informationsinhalte abgeschlossen. Anderenfalls wird die mit der siebten Meldung M6 übertragene zweite Servicenachricht SN2 nochmals übertragen. Scheitert auch dieser Übertragungsversuch, so hat das Servicezentrum SZ wie gemäß der FIGUR 2 zwei Optionen (ebenfalls in der FIGUR 4 nicht dargestellt):

Entweder es versucht eine erneute Übertragung bis die Übertragung erfolgreich gewesen ist oder es bricht den Übertragungsvorgang ab. Letzteres hat zur Folge, dass das Telekommunikationsgerät TKG die angeforderten Informationsinhalte in der aktuellen zweiten Sitzung SI2 nicht erhalten hat und es bei Bedarf unmittelbar nach dem Abbruch oder mit einem zeitlichen Verzug eine komplett neue, die erste Sitzung SI1 (Anforderungssitzung) und die zweite Sitzung SI2 (Auslieferungssitzung) umfassende Prozedur starten muss.

Ist die Menge der auszuliefernden Informationsinhalte so groß, dass eine zweite Servicenachricht SN2 von der mit der Nachricht maximal übertragbaren Kapazität her nicht ausreicht, die auszuliefernden Informationsinhalte zu übertragen, so wiederholt sich wie in der FIGUR 2 die mit der siebten Meldung M6 und der achten Meldung M7 abgewickelte Teilauslieferung solange, bis das Servicezentrum SZ in der zweiten Sitzung SI2 wie in der FIGUR 2 mit der neunten Meldung M8 und dem Meldungsinhalt "DLL_SMS_DATA[DELIVER]" (**D**ata **L**ink **L**ayer_**S**hort **M**essage **S**ervice_**DATA[DELIVER**]) letztmalig für die komplette Auslieferung der Informationsinhalte die zweite Servicenachricht SN2 übertragen hat und bis das Telekommunikationsgerät TKG zur Bestätigung dessen, dass es die letzte zweite Servicenachricht SN2 von dem Servicezentrum SZ erhalten hat, wie in der FIGUR 2 die zehnte Meldung M9 mit dem Meldungsinhalt "DLL_SMS_ACK[DELIVER_REP]" (**D**ata **L**ink **L**ayer **S**hort **M**essage **S**ervice_**ACK**nowledge[**DELIVER**_**REP**eated]) an das Servicezentrum SZ geschickt hat.

In dieser zehnten Meldung M9 wird wieder wie in der achten Meldung M7 der Inhalt der letzten zweiten Servicenachricht SN2 als Wiederholung zurückgeschickt. Auf diese Weise kann das Servicezentrum SZ nun abschließend überprüfen, ob die mit der neunten Meldung M8 letztmalig gesendete zweite Servicenachricht SN2 von dem Telekommunikationsgerät TKG ebenfalls vollständig und richtig empfangen worden ist.

Ist das der Fall, so ist damit die mit der siebten Meldung M6 begonnene Übertragung der Informationsinhalte abgeschlossen. Anderenfalls wird die mit der neunten Meldung M8 letztmalig übertragene zweite Servicenachricht SN2 nochmals übertragen. Scheitert auch dieser Übertragungsversuch, so hat das Servicezentrum SZ wieder zwei Optionen (in der FIGUR 4 nicht dargestellt) :

Entweder es versucht eine erneute Übertragung bis die Übertragung erfolgreich gewesen ist oder es bricht den Übertragungsvorgang ab. Letzteres hat zur Folge, dass das Telekommunikationsgerät TKG die angeforderten Informationsinhalte in der aktuellen zweiten Sitzung SI2 nicht vollständig (nur teilweise) erhalten hat und es bei Bedarf unmittelbar nach dem Abbruch oder mit einem zeitlichen Verzug eine komplett neue, die erste Sitzung SI1 (Anforderungssitzung) und die zweite Sitzung SI2 (Auslieferungssitzung) umfassende Prozedur starten muss.

Nachdem das Servicezentrum SZ festgestellt hat, dass die gesendete zweite Servicenachricht SN2 vollständig und richtig von dem Telekommunikationsgerät TKG empfangen worden ist, schickt das Servicezentrum SZ wie in der FIGUR 2 die elfte Meldung M10 mit dem gleichen Meldungsinhalt "DLL_SMS_REL" (**D**ata **L**ink **L**ayer_**S**hort **M**essage **S**ervice_**REL**ease) an das Tele kommunikationsgerät TKG. Mit dieser elften Meldung M10 wird von dem Servicezentrum SZ die zweite Sitzung SI2 aufgelöst. Nach der Übertragung der elften Meldung M10, die also die zweite Sitzung SI2 abschließt, gehen sowohl das Servicezentrum SZ als auch das Telekommunikationsgerät TKG in den zweiten Betriebszustand "ON-HOOK". Damit ist die bestehende Verbindung abgebaut und das Ausliefern der von dem Telekommunikationsgerät TKG angeforderten Informationsinhalte durch das Servicezentrum SZ gemäß der Erfindung ist beendet.

FIGUR 5 zeigt den prinzipiellen Aufbau des Telekommunikationsgerätes TKG einerseits für das Anfordern der Informationsinhalte beim Servicezentrum SZ, insbesondere beim Kurznachrichten-Servicezentrum, und das Ausliefern der angeforderten Informationsinhalte an das Telekommunikationsgerät TKG durch das Servicezentrum SZ gemäß der FIGUR 4 über ein beispielsweise als Festnetz [Public Switched Telephone Network (PSTN) oder als Integrated Services Digital Network (ISDN)] oder als Mobilfunknetz ausgebildetes Telekommunikationsnetz TKN.

Damit das Telekommunikationsgerät TKG die in der FIGUR 4 dargestellten Meldungen M0, M1...M3, M5...M10 und die beiden Servicenachrichten SN1, SN2 übertragen (senden und empfangen) kann, weist das Telekommunikationsgerät TKG wie das Telekommunikationsgerät TKG' in der FIGUR 3 die Zentrale Steuereinrichtung ZSE zur Steuerung der Funktions- und Bedienabläufe in dem Telekommunikationsgerät TKG, die Benutzerschnittstelle BSS sowie die Telekommunikationsgerät-/Servicezentrumsschnittstelle TSSS auf. Im Unterschied zu dem Telekommunikationsgerät TKG' in der FIGUR 3 weist die Zentrale Steuereinrichtung ZSE des Telekommunikationsgerätes TKG Auswerte-/Steuerungsmittel ASM und Zeitüberwachungsmittel ZÜM, die vorzugsweise als Programmmodule ausgebildet sind und die eine Funktionseinheit bilden, was durch die Verbindung zwischen den beiden Mitteln in der FIGUR 5 zum Ausdruck kommt.

Die Benutzerschnittstelle BSS umfasst wieder z.B. die für Telekommunikationsgeräte typische Bedienoberfläche, bestehend aus eine Tastatur, einem Display sowie elektroakustische Wandler zur Spracheingabe und Sprachausgabe. Die Telekommunikationsgerät-/Servicezentrumsschnittstelle TSSS und die Benutzerschnittstelle BSS sind wider jeweils mit der Zentralen Steuereinrichtung ZSE verbunden. Die Telekommunikationsgerät-/Servicezentrumsschnittstelle TSSS weist zudem wieder die Sendemittel SM und Empfangsmittel EM auf, die ebenfalls mit der Zentralen Steuereinrichtung ZSE verbunden sind und über die das Telekommunikationsgerät TKG mit dem Servicezentrum SZ via dem Festnetz FN verbunden ist.

Möchte der Benutzer des Telekommunikationsgerätes TKG benutzerspezifische Informationsinhalte, wie z.B. Texte, multimediale Inhalte, das sind Audio-/Videodaten, Grafiken, Programme etc., von dem Servicezentrum SZ abrufen und herunterladen, so gibt er entsprechende das Herunterladen initiierende Kommandos an der Benutzerschnittstelle BSS ein und generiert über die Bedienoberfläche der Benutzerschnittstelle BSS die erste Servicenachricht SN1, z.B. eine Kurznachricht. Diese Kommandos und die erste Servicenachricht SN1 werden von der Zentralen Steuereinrichtung ZSE interpretiert. Erkennt die Zentrale Steuereinrichtung ZSE aufgrund dieser Interpretation der Kommandos und der ersten Servicenachricht SN1, dass der Benutzer des Telekommunikationsgerätes TKG eine Telekommunikationsverbindung TKV zu dem Servicezentrum SZ aufbauen möchte, so werden die Telekommunikationsgerät-/Servicezentrumsschnittstelle TSSS und insbesondere die Sendemittel SM in dieser Schnittstelle von den Auswerte-/Steuerungsmitteln ASM in der Zentralen Steuereinrichtung ZSE derart angesteuert, dass zunächst die erste Meldung M0 über das Telekommunikationsnetz TKN an das Servicezentrum SZ übertragen wird, womit gemäß den Ausführungen zu der FIGUR 4 die von dem Benutzer des Telekommunikationsgerätes TKG gewünschte Telekommunikationsverbindung TKV aufgebaut ist.

Über diese aufgebaute Telekommunikationsverbindung TKV werden anschließend die in der Figur 4 dargestellten und zu der ersten Sitzung SI1 korrespondierenden Meldungen M1...M3 einschließlich der generierten ersten Servicenachricht SN1 zwischen dem Telekommunikationsgerät TKG und dem Servicezentrum SZ in der dort dargestellten Reihenfolge und Übertragungsrichtung übertragen. Hierzu werden von den Auswerte-/Steuerungsmitteln ASM in der Zentralen Steuereinrichtung ZSE in dem Telekommunikationsgerät TKG, je nach dem welche Meldung gerade und ob die erste Servicenachricht SN1 zu übertragen (zu senden bzw. zu empfangen) ist, entweder die Sendemittel SM oder die Empfangsmittel EM in der Telekommunikationsgerät-/Servicezentrumsschnittstelle TSSS mit dem Servicezentrum SZ durch Leitungsanschaltung, falls das Telekommunikationsnetz ein Festnetz ist, oder durch Aktivierung einer Luftschnittstelle, falls das Telekommunikationsnetz ein Mobilfunknetz ist, verbunden.

Sind die zu der ersten Sitzung SI1 korrespondierenden Meldungen M1...M3 und die erste Servicenachricht SN1 vollständig und richtig übertragen worden, wobei die hierzu auf der Seite des Telekommunikationsgerätes TKG gegebenenfalls erforderliche Überprüfung einschließlich des Generierens der Bestätigungsmeldung mit den Auswerte-/Steuerungsmitteln ASM in der Zentralen Steuereinrichtung ZSE durchgeführt wird, ist die sechste Meldung M5 an das Servicezentrum SZ geschickt worden und hat damit der direkte Wechsel von der ersten Sitzung SI1, der Anforderungssitzung, zu der zweiten Sitzung SI2, der Auslieferungssitzung SI2 stattgefunden, ohne dass es dabei wie in den FIGUREN 1 und 2 zu einem Abbau der bestehenden (alten) . Verbindung und zu einem Neuaufbau einer weiteren Verbindung kommt, so kann die Auslieferung der von dem Benutzer des Telekommunikationsgerätes TKG angeforderten Informationsinhalte durch das Servicezentrum SZ beginnen.

Hierzu werden die in der Figur 4 dargestellten und zu der zweiten Sitzung SI2 korrespondierenden Meldungen M5...M10 einschließlich der von dem Servicezentrum SZ jeweils generierten zweiten Servicenachricht SN2 zwischen dem Telekommunikationsgerät TKG und dem Servicezentrum SZ in der dort dargestellten Reihenfolge und Übertragungsrichtung übertragen. Von den Auswerte-/Steuerungsmitteln ASM in der Zentralen Steuereinrichtung ZSE des Telekommunikationsgerätes TKG werden hierfür, je nach dem welche Meldung gerade zu übertragen (zu senden bzw. zu empfangen) ist und ob die zweite Servicenachricht SN2 übertragen wird, wieder entweder die Sendemittel SM oder die Empfangsmittel EM in der Telekommunikationsgerät-/Servicezentrumsschnittstelle TSSS mit dem Servicezentrum SZ durch Leitungsanschaltung, falls das Telekommunikationsnetz ein Festnetz ist, oder durch Aktivierung einer Luftschnittstelle, falls das Telekommunikationsnetz ein Mobilfunknetz ist, verbunden.

Sind die zu der zweiten Sitzung SI2 korrespondierenden Meldungen M5...M10 und jeweils die zweite Servicenachricht SN2 vollständig und richtig übertragen worden, wobei die hierzu auf der Seite des Telekommunikationsgerätes TKG gegebenenfalls erforderliche Überprüfung einschließlich des Generierens der Bestätigungsmeldung von den Auswerte-/Steuerungsmitteln ASM in der Zentralen Steuereinrichtung ZSE durchgeführt wird, und sind damit gemäß den Ausführungen zu der FIGUR 4 sowohl die zweite Sitzung SI2 aufgelöst als auch letztlich die Telekommunikationsverbindung TKV zwischen dem Telekommunikationsgerät TKG und dem Servicezentrum SZ abgebaut, so ist das Herunterladen (Anfordern und Ausliefern) der von dem Benutzer des Telekommunikationsgerätes TKG gewünschten Informationsinhalte vom Servicezentrum SZ beendet bzw. abgeschlossen.

Damit für das Herunterladen der Informationsinhalte über die von dem Telekommunikationsgerät TKG aufgebauten, für den Benutzer kostenpflichtige Telekommunikationsverbindung TKV nicht unnötige Kosten für das Aufrechthalten der aufgebauten Telekommunikationsverbindung TKV entstehen, sind in der Zent ralen Steuereinrichtung ZSE des Telekommunikationsgerätes TKG die Zeitüberwachungsmittel ZÜM enthalten. Mit diesen Zeitüberwachungsmitteln ZÜM wird die Zeitdauer der zweiten Sitzung SI2 überwacht, die in der Regel 60 Sekunden beträgt.

## Patentansprüche

1. Verfahren zum Senden und Empfangen von Servicenachrichten an ein bzw. von einem Servicezentrum, bei dem
a) ein Telekommunikationsgerät (TKG) eine Telekommunikationsverbindung (TKV) zu dem Servicezentrum (SZ) aufbaut (M0),
b) das Servicezentrum (SZ) auf der aufgebauten Telekommunikationsverbindung (TKV) eine erste Sitzung (SI1) anstößt (M1),
c) in der ersten Sitzung (SI1) das Telekommunikationsgerät (TKG) an das Servicezentrum (SZ) eine erste Servicenachricht (SN1) sendet (M2), deren Empfang das Servicezentrum (SZ) bestätigt (M3),
**dadurch gekennzeichnet, dass**
d) das Telekommunikationsgerät (TKG) infolge der Bestätigung durch das Servicezentrum (SZ) auf der aufgebauten Telekommunikationsverbindung (TKV) eine zweite Sitzung (SI2) anstößt (M5),
e) in der zweiten Sitzung (SI2) das Servicezentrum (SZ) an das Telekommunikationsgerät (TKG) mindestens eine zweite Servicenachricht (SN2) sendet (M6, M8), deren Empfang das Telekommunikationsgerät (TKG) bestätigt (M7, M9),
f) das Servicezentrum (SZ) infolge der Bestätigung durch das Telekommunikationsgerät (TKG) die zweite Sitzung (SI2) auflöst (M10) und **dadurch** die Telekommunikationsverbindung abgebaut wird.

2. Verfahren nach Anspruch 1, **dadurch gekennzeichnet, dass**
die Zeitdauer der zweiten Sitzung (SI2) vom Telekommunikationsgerät (TKG) überwacht wird.

3. Verfahren nach Anspruch 2, **dadurch gekennzeichnet, dass**
die Zeitdauer 60 Sekunden beträgt.

4. Verfahren nach Anspruch 1, **dadurch gekennzeichnet, dass**
mit der ersten Servicenachricht (SN1) in der ersten Sitzung (SI1) im Servicezentrum (SZ) hinterlegte oder vom Servicezentrum (SZ) verfügbar gemachte bzw. besorgbare, herunterladbare Informationsinhalte, insbesondere Texte, multimediale Inhalte wie z.B. Audio-/Videodaten, Grafiken, Programme etc., von dem Telekommunikationsgerät () angefordert bzw. abgerufen werden.

5. Verfahren nach Anspruch 4, **dadurch gekennzeichnet, dass**
mit der zweiten Servicenachricht (SN2) in der zweiten Sitzung (SI2) die angeforderten bzw. abgerufenen Informationsinhalte von dem Servicezentrum (SZ) zum Telekommunikationsgerät (TKG) übertragen werden.

6. Verfahren nach Anspruch 1 oder 4, **dadurch gekennzeichnet, dass**
eine Kurznachricht gemäß dem "Short Message Service" oder eine Multimedianachricht gemäß dem "Multimedia Message Service" als erste Servicenachricht (SN1) benutzt wird.

7. Verfahren nach Anspruch 1 oder 5, **dadurch gekennzeichnet, dass**
eine Kurznachricht gemäß dem "Short Message Service" oder eine Multimedianachricht gemäß dem "Multimedia Message Service" als zweite Servicenachricht (SN2) benutzt wird.

8. Verfahren nach Anspruch 1, **dadurch gekennzeichnet, dass**
ein Schnurlos-Telefon mit einer Schnurlos-Basisstation und mindestens einem Schnurlos-Handapparat oder ein schnurgebundenes Telefon als Telekommunikationsendgerät (TKG) und eine Festnetzverbindung als die Telekommunikationsverbindung (TKV) zwischen dem Schnurlostelefon (TKG) bzw. dem schnurgebundenen Telefon (TKG) und dem Servicezentrum (SZ) benutzt wird.

9. Verfahren nach Anspruch 1, **dadurch gekennzeichnet, dass**
ein Mobiltelefon als Telekommunikationsendgerät (TKG) und eine Mobilfunkverbindung als die Telekommunikationsverbindung (TKV) zwischen dem Mobiltelefon (TKG) und dem Servicezentrum (SZ) benutzt wird.

10. Telekommunikationsgerät zum Senden und Empfangen von Servicenachrichten an ein bzw. von einem Servicezentrum, mit
a) einer Benutzerschnittstelle (BSS) zum Eingeben von Benutzerkommandos und Ausgabe von Benutzerinformationen,
b) einer Zentralen Steuereinrichtung (ZSE) zur Steuerung der Funktions- und Bedienabläufe in dem Telekommunikationsgerät (TKG), die mit der Benutzerschnittstelle (BSS) verbunden ist,
c) einer Telekommunikationsgerät-/Servicezentrumsschnittstelle (TSSS) für Telekommunikationsverbindungen (TKV, TKV') zum Servicezentrum (SZ), die Sendemittel (SM) und Empfangsmittel (EM) umfasst, wobei beide Mittel mit der Zentralen Steuereinrichtung (ZSE) verbunden sind, wobei
d) die Benutzerschnittstelle (BSS), die Zentrale Steuereinrichtung (ZSE) und die Sendemittel (SM) der Telekommunikationsgerät-/Servicezentrumsschnittstelle (TSSS) derart ausgebildet sind, dass eine Telekommunikationsverbindung (TKV) zu dem Servicezentrum (SZ) aufgebaut wird (M0),
e) die Benutzerschnittstelle (BSS), die Zentrale Steuereinrichtung (ZSE) und die Empfangsmittel (EM) der Telekommunikationsgerät-/Servicezentrumsschnittstelle (TSSS) derart ausgebildet sind, dass erkannt wird, dass das Servicezentrum (SZ) auf der aufgebauten Telekommunikationsverbindung (TKV) eine erste Sitzung (SI1) angestoßen hat (M1),
f) die Benutzerschnittstelle (BSS), die Zentrale Steuereinrichtung (ZSE) sowie die Sendemittel (SM) und Empfangsmittel (EM) der Telekommunikationsgerät-/Servicezentrumsschnittstelle (TSSS) derart ausgebildet sind, dass in der ersten Sitzung (SI1) das Telekommunikationsgerät (TKG) über die Sendemittel (SM) eine erste Servicenachricht (SN1) an das Servicezentrum (SZ) sendet (M2), deren Empfang das Servicezentrum (SZ) bestätigt (M3),
**dadurch gekennzeichnet, dass**
g) der Zentralen Steuereinrichtung (ZSE) Auswerte-/Steuerungsmittel (ASM) zugeordnet sind, die derart ausgebildet sind, dass infolge der über die Empfangsmittel (EM) empfangenen Bestätigung des Servicezentrums (SZ) auf der aufgebauten Telekommunikationsverbindung (TKV) über die Sendemittel (SM) eine zweite Sitzung (SI2) angestoßen wird (M5),
h) die Benutzerschnittstelle (BSS), die Zentrale Steuereinrichtung (ZSE) sowie die Sendemittel (SM) und Empfangsmittel (EM) der Telekommunikationsgerät-/Servicezentrumsschnittstelle (TSSS) derart ausgebildet sind, dass in der zweiten Sitzung (SI2) das Telekommunikationsgerät (TKG) mindestens eine von dem Servicezentrum (SZ) gesendete zweite Servicenachricht (SN2) empfängt (M6, M8) und deren Empfang bestätigt (M7, M9),
i) die Benutzerschnittstelle (BSS), die Zentrale Steuereinrichtung (ZSE) sowie die Sendemittel (SM) und Empfangsmittel (EM) der Telekommunikationsgerät-/Servicezentrumsschnittstelle (TSSS) derart ausgebildet sind, dass zum Auflösen der zweiten Sitzung (SI2) durch das Servicezentrum (SZ) diesem über die Sendemittel (SM) eine Bestätigung (M7, M9) gesendet wird (M10), wodurch die Telekommunikationsverbindung abgebaut wird.

11. Telekommunikationsgerät nach Anspruch 10, **dadurch gekennzeichnet, dass**
der Zentralen Steuereinrichtung (ZSE) Zeitüberwachungsmittel (ZÜM) zugeordnet sind, die die Zeitdauer der zweiten Sitzung (SI2) überwachen.

12. Telekommunikationsgerät nach Anspruch 11, **dadurch gekennzeichnet, dass**
die Zeitdauer 60 Sekunden beträgt.

13. Telekommunikationsgerät nach Anspruch 10, **dadurch gekennzeichnet, dass**
die erste Servicenachricht (SN1) derart beschaffen ist, dass in der ersten Sitzung (SI1) im Servicezentrum (SZ) hinterlegte oder vom Servicezentrum verfügbar gemachte bzw. besorgbare, herunterladbare Informationsinhalte, insbesondere Texte, multimediale Inhalte wie z.B. Audio-/Videodaten, Grafiken, Programme etc., von dem Telekommunikationsgerät (TKG) angefordert bzw. abgerufen werden.

14. Telekommunikationsgerät nach Anspruch 13, **dadurch gekennzeichnet, dass**
die zweite Servicenachricht (SN2) derart beschaffen ist, dass in der zweiten Sitzung (SI2) die angeforderten bzw. abgerufenen Informationsinhalte von dem Servicezentrum (SZ) zum Telekommunikationsgerät (TKG) übertragen werden.

15. Telekommunikationsgerät nach Anspruch 10 oder 13, **dadurch gekennzeichnet, dass**
die erste Servicenachricht (SN1) eine Kurznachricht gemäß dem "Short Message Service" oder eine Multimedianachricht gemäß dem "Multimedia Message Service" ist.

16. Telekommunikationsgerät nach Anspruch 10 oder 14, **dadurch gekennzeichnet, dass**
die zweite Servicenachricht (SN2) eine Kurznachricht gemäß dem "Short Message Service" oder eine Multimedianachricht gemäß dem "Multimedia Message Service" ist.

17. Telekommunikationsgerät nach Anspruch 10, **gekennzeichnet durch**
ein Schnurlos-Telefon (TKG) mit einer Schnurlos-Basisstation und mindestens einem Schnurlos-Handapparat oder ein schnurgebundenes Telefon und eine Festnetzverbindung zwischen dem Schnurlostelefon (TKG) bzw. dem schnurgebundenen Telefon (TKG) und dem Servicezentrum (SZ).

18. Telekommunikationsgerät nach Anspruch 10, **gekennzeichnet durch**
ein Mobiltelefon (TKG) und eine Mobilfunkverbindung zwischen dem Mobiltelefon (TKG) und dem Servicezentrum (SZ).

## Claims

1. Method for transmitting and receiving service messages to and from a service centre, wherein
a) a telecommunications device (TKG) sets up (M0) a telecommunications connection (TKV) to the service centre (SZ),
b) the service centre (SZ) initiates a first session (SI1) on the established telecommunications connection (TKV),
c) in the first session (SI1) the telecommunications device (TKG) sends (M2) a first service message (SN1) to the service centre (SZ), receipt of which is acknowledged by the service centre (SZ),
**characterised in that**
d) as a result of the acknowledgment by the service centre (SZ) the telecommunications device (TKG) initiates a second session (SI2) on the established telecommunications connection (TKV),
e) in the second session (SI2) the service centre (SZ) sends (M6, M8) at least one second service message (SN2) to the telecommunications device (TKG), the receipt of which is acknowledged (M7, M9) by the telecommunications device (TKG),
f) as a result of the acknowledgment by the telecommunications device (TKG) the service centre (SZ) releases (M10) the second session (SI2) and the telecommunications connection is cleared down thereby.

2. Method according to claim 1, **characterised in that**
the duration of the second session (SI2) is monitored by the telecommunications device (TKG).

3. Method according to claim 2, **characterised in that**
the duration is 60 seconds.

4. Method according to claim 1, **characterised in that**
downloadable information content, in particular texts, multimedia content such as e.g. audio/video data, graphics, programs, etc., that is stored in the service centre (SZ) or made available or obtainable by the service centre (SZ) in the first session (SI1) is requested or retrieved by the telecommunications device (TKG) by means of the first service message (SN1) .

5. Method according to claim 4, **characterised in that**
the requested or retrieved information content is transmitted to the telecommunications device (TKG) by the service centre (SZ) by means of the second service message (SN2) in the second session (SI2).

6. Method according to claim 1 or 4, **characterised in that**
a short message conforming to the Short Message Service or a multimedia message conforming to the Multimedia Message Service is used as the first service message (SN1).

7. Method according to claim 1 or 5, **characterised in that**
a short message conforming to the Short Message Service or a multimedia message conforming to the Multimedia Message Service is used as the second service message (SN2).

8. Method according to claim 1, **characterised in that**
a cordless telephone with a cordless base station and at least one cordless handset or a corded telephone is used as the telecommunications device (TKG) and a fixed network connection is used as the telecommunications connection (TKV) between the cordless telephone (TKG) or, as the case may be, the corded telephone (TKG) and the service centre (SZ).

9. Method according to claim 1, **characterised in that**
a mobile telephone is used as the telecommunications device (TKG) and a mobile radio connection is used as the telecommunications connection (TKV) between the mobile telephone (TKG) and the service centre (SZ).

10. Telecommunications device for transmitting and receiving service messages to and from a service centre, comprising
a) a user interface (BSS) for inputting user commands and outputting user information,
b) a central control device (ZSE) for controlling the functional and operational processes in the telecommunications device (TKG), said central control device (ZSE) being connected to the user interface (BSS),
c) a telecommunications device/service centre interface (TSSS) for telecommunications connections (TKV, TKV') to the service centre (SZ), said telecommunications device/service centre interface (TSSS) including transmitting means (SM) and receiving means (EM), with both said means being connected to the central control device (ZSE), wherein
d) the user interface (BSS), the central control device (ZSE) and the transmitting means (SM) of the telecommunications device/service centre interface (TSSS) are embodied in such a way that a telecommunications connection (TKV) is set up (M0) to the service centre (SZ),
e) the user interface (BSS), the central control device (ZSE) and the receiving means (EM) of the telecommunications device/service centre interface (TSSS) are embodied in such a way that it is recognised that the service centre (SZ) has initiated (M1) a first session (SI1) on the established telecommunications connection (TKV),
f) the user interface (BSS), the central control device (ZSE) and the transmitting means (SM) and receiving means (EM) of the telecommunications device/service centre interface (TSSS) are embodied in such a way that in the first session (SI1) the telecommunications device (TKG) sends a first service message (SN1) to the service centre (SZ) via the transmitting means (SM), receipt of which first service message (SN1) is acknowledged (M3) by the service centre (SZ),
**characterised in that**
g) the central control device (ZSE) is assigned evaluation/control means (ASM) which are embodied in such a way that as a result of the acknowledgment by the service centre (SZ) received via the receiving means (EM) a second session (SI2) is initiated (M5) via the transmitting means (SM) on the established telecommunications connection (TKV),
h) the user interface (BSS), the central control device (ZSE) and the transmitting means (SM) and receiving means (EM) of the telecommunications device/service centre interface (TSSS) are embodied in such a way that in the second session (SI2) the telecommunications device (TKG) receives (M6, M8) at least one second service message (SN2) sent by the service centre (SZ) and acknowledges (M7, M9) the receipt thereof,
i) the user interface (BSS), the central control device (ZSE) and the transmitting means (SM) and receiving means (EM) of the telecommunications device/service centre interface (TSSS) are embodied in such a way that in order for the service centre (SZ) to release the second session (SI2) an acknowledgment (M7, M9) is sent (M10) to the service centre (SZ) via the transmitting means (SM), as a result of which the telecommunications connection is cleared down.

11. Telecommunications device according to claim 10, **characterised in that**
the central control device (ZSE) is assigned time monitoring means (ZÜM) which monitor the duration of the second session (SI2).

12. Telecommunications device according to claim 11, **characterised in that**
the duration is 60 seconds.

13. Telecommunications device according to claim 10, **characterised in that**
the first service message (SN1) is embodied in such a way that downloadable information content, in particular texts, multimedia content such as e.g. audio/video data, graphics, programs, etc., that is stored in the service centre (SZ) or made available or obtainable by the service centre (SZ) in the first session (SI1) is requested or retrieved by the telecommunications device (TKG).

14. Telecommunications device according to claim 13, **characterised in that**
the second service message (SN2) is embodied in such a way that in the second session (SI2) the requested or retrieved information content is transmitted to the telecommunications device (TKG) by the service centre (SZ).

15. Telecommunications device according to claim 10 or 13, **characterised in that**
the first service message (SN1) is a short message conforming to the Short Message Service or a multimedia message conforming to the Multimedia Message Service.

16. Telecommunications device according to claim 10 or 14, **characterised in that**
the second service message (SN2) is a short message conforming to the Short Message Service or a multimedia message conforming to the Multimedia Message Service.

17. Telecommunications device according to claim 10, **characterised by**
a cordless telephone (TKG) with a cordless base station and at least one cordless handset or a corded telephone and a fixed network connection between the cordless telephone (TKG) or the corded telephone (TKG) and the service centre (SZ).

18. Telecommunications device according to claim 10, **characterised by**
a mobile telephone (TKG) and a mobile radio connection between the mobile telephone (TKG) and the service centre (SZ).

## Revendications

1. Procédé pour envoyer et recevoir des messages de service à resp. d'un centre de service, dans lequel
a) un appareil de télécommunication (TKG) établit (M0) une liaison de télécommunication (TKV) avec le centre de service (SZ),
b) le centre de service (SZ) initialise (M1) une première session (SI1) sur la liaison de télécommunication établie (TKV),
c) l'appareil de télécommunication (TKG), à la première session (SI1), envoie (M2) au centre de service (SZ) un premier message de service (SN1) dont le centre de service (SZ) confirme (M3) la réception,
**caractérisé en ce que**
d) l'appareil de télécommunication (TKG), suite à la confirmation par le centre de service (SZ), initialise (M5) une deuxième session (SI2) sur la liaison de télécommunication établie (TKV),
e) le centre de service (SZ), à la deuxième session (SI2), envoie (M6, M8) à l'appareil de télécommunication (TKG) au moins un deuxième message de service (SN2) dont l'appareil de télécommunication (TKG) confirme (M7, M9) la réception,
f) le centre de service (SZ), suite à la confirmation par l'appareil de télécommunication (TKG), dissout (M10) la deuxième session (SI2) et, de ce fait, la liaison de télécommunication est fermée.

2. Procédé selon la revendication 1, **caractérisé en ce que** la durée temporelle de la deuxième session (SI2) est surveillée par l'appareil de télécommunication (TKG).

3. Procédé selon la revendication 2, **caractérisé en ce que** la durée temporelle est de 60 secondes.

4. Procédé selon la revendication 1, **caractérisé en ce que** sont demandés resp. appelés par l'appareil de télécommunication, avec le premier message de service (SN1), à la première session (SI1), des contenus d'information, en particulier des textes, des contenus multimédia tels que, par exemple, des données audio / vidéo, des graphiques, des programmes etc. téléchargeables, déposés dans le centre de service (SZ) ou rendus disponibles resp. fournissables par le centre de service (SZ).

5. Procédé selon la revendication 4, **caractérisé en ce que** les contenus d'information demandés resp. appelés sont transmis du centre de service (SZ) vers l'appareil de télécommunication (TKG) avec le deuxième message de service (SN2) à la deuxième session (SI2).

6. Procédé selon la revendication 1 ou 4, **caractérisé en ce qu'**un message court selon le «Short Message Service» ou un message multimédia selon le «Multimedia Message Service» sont utilisés en tant que premier message de service (SN1).

7. Procédé selon la revendication 1 ou 5, **caractérisé en ce qu'**un message court selon le «Short Message Service» ou un message multimédia selon le «Multimedia Message Service» sont utilisés en tant que deuxième message de service (SN2).

8. Procédé selon la revendication 1, **caractérisé en ce que** sont utilisés un téléphone sans fil avec une station de base sans fil et au moins un appareil portable sans fil, ou un téléphone filaire en tant que terminaux de télécommunication (TKG) et une liaison réseau fixe en tant que liaison de télécommunication (TKV) entre le téléphone sans fil (TKG) resp. le téléphone filaire (TKG) et le centre de service (SZ).

9. Procédé selon la revendication 1, **caractérisé en ce que** sont utilisés un téléphone mobile en tant que terminal de télécommunication (TKG) et une liaison radio mobile en tant que liaison de télécommunication (TKV) entre le téléphone mobile (TKG) et le centre de service (SZ).

10. Appareil de télécommunication pour envoyer et recevoir des messages de service à resp. d'un centre de service, comprenant
a) une interface utilisateur (BSS) pour saisir des commandes utilisateur et produire des informations utilisateur en sortie,
b) un dispositif de commande central (ZSE) pour commander les déroulements fonctionnels et de commande dans l'appareil de télécommunication (TKG), lequel dispositif est relié à l'interface utilisateur (BSS),
c) une interface appareil de télécommunication / centre de service (TSSS) pour des liaisons de télécommunication (TKV, TKV') avec le centre de service (SZ), laquelle comprend des moyens d'émission (SM) et des moyens de réception (EM), les deux moyens étant reliés au dispositif de commande central (ZSE),
d) l'interface utilisateur (BSS), le dispositif de commande central (ZSE) et les moyens d'émission (SM) de l'interface appareil de télécommunication / centre de service (TSSS) étant réalisés de manière telle qu'une liaison de télécommunication (TKV) est établie (M0) vers le centre de service (SZ),
e) l'interface utilisateur (BSS), le dispositif de commande central (ZSE) et les moyens de réception (EM) de l'interface appareil de télécommunication / centre de service (TSSS) étant réalisés de manière telle qu'il est reconnu que le centre de service (SZ) a initialisé (M1) une première session (SI1) sur la liaison de télécommunication établie (TKV),
f) l'interface utilisateur (BSS), le dispositif de commande central (ZSE) ainsi que les moyens d'émission (SM) et les moyens de réception (EM) de l'interface appareil de télécommunication / centre de service (TSSS) étant réalisés de manière telle que, à la première session (SI1), l'appareil de télécommunication (TKG), via les moyens d'émission (SM), envoie (M2) au centre de service (SZ) un premier message de service (SN1) dont le centre de service (SZ) confirme (M3) la réception,
**caractérisé en ce que**
g) sont associés, au dispositif de commande central (ZSE), des moyens d'évaluation / de commande (ASM) qui sont réalisés de manière telle que, suite à la confirmation du centre de service (SZ) reçue via les moyens de réception (EM), une deuxième session (SI2) est initialisée (M5) via les moyens d'émission (SM) sur la liaison de télécommunication établie (TKV),
h) l'interface utilisateur (BSS), le dispositif de commande central (ZSE) ainsi que les moyens d'émission (SM) et les moyens de réception (EM) de l'interface appareil de télécommunication / centre de service (TSSS) sont réalisés de manière telle que, à la deuxième session (SI2), l'appareil de télécommunication (TKG) reçoit (M6, M8) au moins un deuxième message de service (SN2) émis par le centre de service (SZ) et en confirme (M7, M9) la réception,
i) l'interface utilisateur (BSS), le dispositif de commande central (ZSE) ainsi que les moyens d'émission (SM) et les moyens de réception (EM) de l'interface appareil de télécommunication / centre de service (TSSS) sont réalisés de manière telle que, pour la dissolution de la deuxième session (SI2) par le centre de service (SZ), une confirmation (M7, M9) est envoyée (M10) à celui-ci via les moyens d'émission (SM), ce par quoi la liaison de télécommunication est fermée.

11. Appareil de télécommunication selon la revendication 10, **caractérisé en ce que** sont associés au dispositif de commande central (ZSE) des moyens de surveillance du temps (ZÜM) qui surveillent la durée temporelle de la deuxième session (SI2).

12. Appareil de télécommunication selon la revendication 11, **caractérisé en ce que** la durée temporelle est de 60 secondes.

13. Appareil de télécommunication selon la revendication 10, **caractérisé en ce que** le premier message de service (SN1) est de nature telle que sont demandés resp. appelés par l'appareil de télécommunication (TKG), à la première session (SI1), des contenus d'information, en particulier des textes, des contenus multimédia tels que, par exemple, des données audio / vidéo, des graphiques, des programmes etc. téléchargeables, déposés dans le centre de service (SZ) ou rendus disponibles resp. fournissables par le centre de service (SZ).

14. Appareil de télécommunication selon la revendication 13, **caractérisé en ce que** le deuxième message de service (SN2) est de nature telle que, à la deuxième session (SI2), les contenus d'information demandés resp. appelés sont transmis du centre de service (SZ) vers l'appareil de télécommunication (TKG).

15. Appareil de télécommunication selon la revendication 10 ou 13, **caractérisé en ce que** le premier message de service (SN1) est un message court selon le «Short Message Service» ou un message multimédia selon le «Multimedia Message Service».

16. Appareil de télécommunication selon la revendication 10 ou 14, **caractérisé en ce que** le deuxième message de service (SN2) est un message court selon le «Short Message Service» ou un message multimédia selon le «Multimedia Message Service».

17. Appareil de télécommunication selon la revendication 10, **caractérisé par** un téléphone sans fil (TKG) avec une station de base sans fil et au moins un appareil portable sans fil, ou un téléphone filaire, et une liaison réseau fixe entre le téléphone sans fil (TKG) resp. le téléphone filaire (TKG) et le centre de service (SZ).

18. Appareil de télécommunication selon la revendication 10, **caractérisé par** un téléphone mobile (TKG) et une liaison radio mobile entre le téléphone mobile (TKG) et le centre de service (SZ).
